# FASCICULE DE BREVET EUROPEEN

(11) **EP 1 606 860 B1**
(45) Date de publication et mention de la délivrance du brevet: **06.01.2010**
(21) Numéro de dépôt: 04715925.6
(22) Date de dépôt: 01.03.2004
(51) Int. Cl.: H01R 13/73, H01R 4/30, F16B 37/04, H02G 5/00

(54) **SYSTEME DE RACCORDEMENT ELECTRIQUE ET DE FIXATION D'AU MOINS UN CONDUCTEUR ELECTRIQUE EN FORME DE PLAQUE SUR UNE PIECE DE SUPPORT**
ELEKTRISCHES UND MECHANISCHES VERBINDUNGSSYSTEM MINDESTENS EINES LEITERS IN FORM EINER PLATTE AUF EINEM TRÄGER
SYSTEM FOR ELECTRICALLY CONNECTING AND FIXING AT LEAST ONE PLATE-TYPE ELECTRICAL CONDUCTOR TO A SUPPORT PIECE

(30) Priorité: 13.03.2003 FR 0303130
(43) Date de publication de la demande: 21.12.2005
(73) Titulaire: IDEALEC, 25300 Pontarlier (FR)
(72) Inventeur: CHARRIER, François, F-25300 PONTARLIER (FR); KRATTINGER, Hervé, F-25300 PONTARLIER (FR)
(74) Mandataire: Palix, Stéphane
(86) Numéro de dépôt international: PCT/FR2004/000475
(87) Numéro de publication internationale: WO 2004/084351

(56) Documents cités:
- EP-A- 0 899 816
- DE-A- 2 543 021
- FR-A- 2 775 032
- US-A- 4 802 863

## Description

La présente invention concerne un système de raccordement électrique et de fixation d'au moins un conducteur électrique en forme de plaque sur une pièce de support.

Plus particulièrement, l'invention se rapporte à de tels systèmes dans lesquels la pièce de support est munie d'un écrou adapté pour coopérer avec une vis de fixation du conducteur.

De tels systèmes de raccordement sont couramment utilisés, par exemple, dans des systèmes de plaques ou de barres de bus pour assurer le raccordement de conducteurs électriques.

Un exemple d'un tel système est décrit dans le document FR-A-2 784 241.

On sait également que de façon générale, ces systèmes de raccordement présentent un certain nombre d'inconvénients notamment lors de la mise en place et du serrage du conducteur contre la pièce de support, dans des endroits difficiles d'accès.

En effet, ces systèmes de raccordement sont généralement placés dans des fonds d'armoires ou de paniers d'alimentation électrique et sont difficilement d'accès aux opérateurs de montage.

Il peut alors arriver que cet opérateur laisse échapper l'une ou l'autre des pièces entrant dans la constitution de ces systèmes et que celle-ci soit difficile, voire impossible à récupérer.

On conçoit alors que ceci est gênant, voire dangereux, notamment pour l'intégrité électrique du reste de l'armoire et du panier.

Le but de l'invention est donc de résoudre ces problèmes.

A cet effet, l'invention a pour objet un système de raccordement électrique et de fixation d'au moins un conducteur électrique en forme de plaque sur une pièce de support munie d'un écrou adapté pour coopérer avec une vis de fixation du conducteur, **caractérisé en ce qu**'une entretoise annulaire en matériau conducteur de l'électricité est associée à la pièce de support sur le côté de celle-ci dirigé vers le conducteur et en ce que l'écrou est disposé du côté de la pièce de support opposé à cette entretoise et est relié à celle-ci par des moyens d'accrochage flottant adaptés pour s'étendre à travers un trou correspondant de cette pièce de support et pour bloquer en rotation au moins l'écrou sur cette pièce.

Suivant d'autres caractéristiques :
- le trou de la pièce de support présente une forme générale oblongue pour faciliter l'engagement de la vis dans l'écrou ;
- les moyens d'accrochage de l'écrou sur l'entretoise présentent également une forme générale oblongue et sont adaptés pour coopérer avec les bords du trou oblong de la pièce de support pour bloquer l'écrou en rotation par rapport à celle-ci ;
- les moyens d'accrochage de l'écrou sur l'entretoise se présentent sous la forme de pattes en forme de crochets adaptées pour s'étendre dans le trou de la pièce de support et dont l'extrémité libre est munie de moyens de butée adaptés pour coopérer avec des moyens de butée complémentaires de l'entretoise ;
- les moyens de butée de l'écrou comprennent au moins une partie en saillie et les moyens de butée complémentaires de l'entretoise comprennent au moins un rebord correspondant ;
- la pièce de support est formée par un autre conducteur ;
- la pièce de support est formée par un composant électrique ; et
- la pièce de support est formée par une plaque de raccordement électrique.

L'invention sera mieux comprise à la lecture de la description qui va suivre, donnée uniquement à titre d'exemple et faite en se référant aux dessins annexés, sur lesquels :

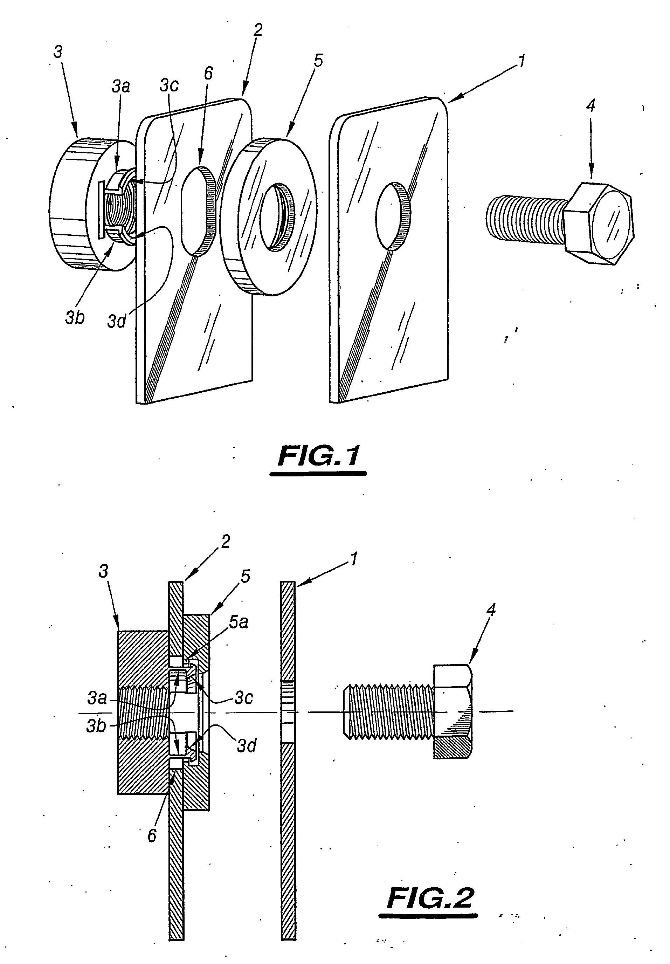

- la Fig.1 représente une vue en perspective éclatée d'un système de raccordement selon l'invention; et
- la Fig.2 représente une vue en coupe de celui-ci.

On a en effet illustré sur ces figures, un système de raccordement électrique et de fixation d'au moins un conducteur électrique en forme de plaques, désigné par la référence générale 1 sur ces figures, sur une pièce de support désignée par la référence générale 2.

Différents modes de réalisation de cette pièce de support peuvent être envisagés et celle-ci peut être formée par un autre conducteur, par un composant électrique ou par une plaque ou barre de raccordement électrique, etc..

En tout état de cause, cette pièce de support est munie d'un écrou désigné par la référence générale 3, sur ces figures, qui est adapté pour coopérer avec une vis de fixation du conducteur sur la pièce et désignée par la référence générale 4.

Dans le système de raccordement selon l'invention, une entretoise annulaire en matériau conducteur de l'électricité désignée par la référence générale 5 sur ces figures, est associée à la pièce de support 2 sur le côté de celle-ci dirigé vers le conducteur 1 et l'écrou 3 est disposé du côté de la pièce de support opposé à cette entretoise 5. L'écrou 3 est relié à l'entretoise 5 par des moyens d'accrochage flottant, adaptés pour s'étendre à travers un trou correspondant de cette pièce de support et pour bloquer en rotation au moins l'écrou sur cette pièce.

Dans l'exemple de réalisation représenté, le trou de la pièce de support est désigné par la référence générale 6 et présente une forme générale oblongue pour faciliter l'engagement de la vis dans l'écrou.

Les moyens d'accrochage de l'écrou sur l'entretoise peuvent également être réalisés de différentes façons.

On notera cependant que ces moyens d'accrochage peuvent également présenter une forme générale oblongue et être adaptés pour coopérer avec les bords du trou oblong 6 de la pièce de support, afin de bloquer l'écrou en rotation par rapport à celle-ci.

Dans l'exemple de réalisation représenté, les moyens d'accrochage de l'écrou 3 sur l'entretoise 5, se présentent sous la forme de pattes en forme de crochets, désignées par les références générales 3a et 3b par exemple, qui sont donc adaptées pour s'étendre dans le trou 6 de la pièce de support 2 et dont l'extrémité libre est munie de moyens de butée adaptés pour coopérer avec des moyens de butée complémentaires de l'entretoise.

Ces moyens de butée de l'écrou comprennent par exemple une partie en saillie respectivement 3c et 3d, à l'extrémité de chaque patte en forme de crochet 3a et 3b de l'écrou, tandis que les moyens de butée complémentaires de l'entretoise 5 comprennent au moins un rebord correspondant, par exemple 5a.

On conçoit alors que grâce à cette structure, les bords des pattes en forme de crochets de l'écrou viennent en appui contre les bords du trou oblong de la pièce de support pour le bloquer en rotation par rapport à la pièce de support et que de plus, l'écrou et l'entretoise sont accrochés l'un sur l'autre et sur la pièce de support, de manière flottante dans le trou oblong 6 de celle-ci, ce qui permet de faciliter l'engagement de la vis 4 dans l'écrou.

Une telle structure permet en particulier de rattraper un éventuel défaut d'alignement du conducteur et de la pièce de support.

Bien entendu, d'autres modes de réalisation encore peuvent être envisagés.

## Revendications

1. Système de raccordement électrique et de fixation d'au moins un conducteur électrique (1) en forme de plaque sur une pièce de support (2) munie d'un écrou (3) adapté pour coopérer avec une vis de fixation (4) du conducteur, **caractérisé en ce qu'**une entretoise annulaire (5) en matériau conducteur de l'électricité est associée à la pièce de support (2) sur le côté de celle-ci dirigé vers le conducteur (1) et **en ce que** l'écrou (3) est disposé du côté de la pièce de support opposé à cette entretoise (5) et est relié à celle-ci par des moyens d'accrochage flottant (3a,3b) adaptés pour s'étendre à travers un trou correspondant (6) de cette pièce de support (2) et pour bloquer en rotation au moins l'écrou sur cette pièce.

2. Système selon la revendication 1, **caractérisé en ce que** le trou (6) de la pièce de support (2) présente une forme générale oblongue pour faciliter l'engagement de la vis (4) dans l'écrou (3).

3. Système selon la revendication 2, **caractérisé en ce que** les moyens d'accrochage de l'écrou (3) sur l'entretoise (6) présentent également une forme générale oblongue et sont adaptés pour coopérer avec les bords du trou oblong (6) de la pièce de support (2) pour bloquer l'écrou (3) en rotation par rapport à celle-ci.

4. Système selon la revendication 3, **caractérisé en ce que** les moyens d'accrochage de l'écrou (3) sur l'entretoise (5) se présentent sous la forme de pattes en forme de crochets (3a,3b) adaptées pour s'étendre dans le trou (4) de la pièce de support et dont l'extrémité libre est munie de moyens de butée (3c,3d) adaptés pour coopérer avec des moyens de butée complémentaires (5a) de l'entretoise (5).

5. Système selon la revendication 4, **caractérisé en ce que** les moyens de butée de l'écrou (3) comprennent au moins une partie en saillie (3c,3d) et **en ce que** les moyens de butée complémentaires de l'entretoise (5) comprennent au moins un rebord correspondant (5a).

6. Système selon l'une quelconque des revendications précédentes, **caractérisé en ce que** la pièce de support (2) est formée par un autre conducteur.

7. Système selon l'une quelconque des revendications 1 à 5, **caractérisé en ce que** la pièce de support (2) est formée par un composant électrique.

8. Système selon l'une quelconque des revendications 1 à 5, **caractérisé en ce que** la pièce de support (2) est formée par une plaque de raccordement électrique.

## Claims

1. A system for electrically coupling and fastening at least one plate-type electrical conductor (1) to a support piece (2) provided with a nut (3) designed to cooperate with a fastening screw (4) of the conductor, **characterized in that** an annular spacer (5) of electrically conductive material is joined to support piece (2) on the side of the latter facing conductor (1) and **in that** nut (3) is disposed on the other side of the support piece opposite this spacer (5) and is connected to this spacer by floating coupling means (3a, 3b) designed to extend through a corresponding hole (6) of this support piece (2) and to prevent at least the nut from rotating on this piece.

2. The system according to claim 1, **characterized in that** hole (6) of support piece (2) has a generally oblong shape in order to facilitate the engagement of screw (4) into nut (3).

3. The system according to claim 2, **characterized in that** the means for coupling nut (3) to spacer (6) also has a generally oblong shape and is designed to cooperate with the edges of oblong hole (6) of support piece (2) in order to prevent nut (3) from rotating relative to the support piece.

4. The system according to claim 3, **characterized in that** the means for coupling nut (3) to spacer (5) are in the form of catch pieces (3a, 3b) designed to extend into hole (4) of the support piece and of which the free ends are provided with stop means (3c, 3d) designed to cooperate with complementary stop (5a) means of spacer (5).

5. The system according to claim 4, **characterized in that** the stop means of nut (3) comprise at least one projecting part (3c, 3d) and **in that** the complementary stop means of spacer (5) comprise at least one corresponding rim (5a).

6. The system according to any of the preceding claims, **characterized in that** support piece (2) is formed by another conductor.

7. The system according to any of claims 1 to 5, **characterized in that** support piece (2) is formed by an electrical component.

8. The system according to claims any of 1 to 5, **characterized in that** support piece (2) is formed by an electrical connection plate.

## Patentansprüche

1. Elektrische Einrichtung zum Anschließen und Befestigen zumindest eines plattenförmigen elektrischen Leiters (1) an ein Halteteil (2), das mit einer Mutter (3) versehen ist, die dazu vorgesehen ist, mit einer Befestigungsschraube (4) des Leiters zusammenzuwirken, **dadurch gekennzeichnet, dass** dem Halteteil (2) auf dessen dem Leiter (1) zugewandten Seite ein ringförmiger Steg (5) aus stromleitendem Material zugeordnet ist und dass die Mutter (3) auf der diesem Steg (5) entgegengesetzten Seite des Halteteils angeordnet und mit diesem über lose Halterungsmittel (3a, 3b) verbunden ist, die dazu vorgesehen sind, sich durch ein entsprechendes Loch (6) dieses Halteteils (2) zu erstrecken und zumindest die Mutter an diesem Teil drehfest zu sichern.

2. Einrichtung nach Anspruch 1, **dadurch gekennzeichnet, dass** das Loch (6) des Halteteils (2) eine längliche Form aufweist, um das Eingreifen der Schraube (4) in die Mutter (3) zu erleichtern.

3. Einrichtung nach Anspruch 2, **dadurch gekennzeichnet, dass** die Mittel zum Haltern der Mutter (3) an dem Steg (6) auch eine längliche Form aufweisen und dazu vorgesehen sind, mit den Rändern des Langlochs (6) des Halteteils (2) zusammenzuwirken, um die Mutter (3) gegenüber diesem drehfest zu sichern.

4. Einrichtung nach Anspruch 3, **dadurch gekennzeichnet, dass** die Mittel zum Haltern der Mutter (3) an dem Steg (5) in Form von hakenförmigen Laschen (3a, 3b) vorliegen, die dazu vorgesehen sind, sich in das Loch (4) des Halteteils zu erstrecken und deren freies Ende mit Anschlagmitteln (3c, 3d) versehen ist, die dazu vorgesehen sind, mit komplementären Anschlagmitteln (5a) des Stegs (5) zusammenzuwirken.

5. Einrichtung nach Anspruch 4, **dadurch gekennzeichnet, dass** die Anschlagmittel der Mutter (3) zumindest einen vorspringenden Abschnitt (3c, 3d) aufweisen und dass die komplementären Anschlagmittel des Stegs (5) zumindest eine entsprechende Kante (5a) aufweisen.

6. Einrichtung nach einem der vorangehenden Ansprüche, **dadurch gekennzeichnet, dass** das Halteteil (2) von einem weiteren Leiter gebildet wird.

7. Einrichtung nach einem der Ansprüche 1 bis 5, **dadurch gekennzeichnet, dass** das Halteteil (2) von einem elektrischen Bauteil gebildet wird.

8. Einrichtung nach einem der Ansprüche 1 bis 5, **dadurch gekennzeichnet, dass** das Halteteil (2) von einer elektrischen Anschlussplatte gebildet wird.
